# EUROPEAN PATENT APPLICATION

(11) **EP 1 343 106 A2**
(43) Date of publication of application: **10.09.2003**
(21) Application number: 03250710.5
(22) Date of filing: 04.02.2003
(51) Int. Cl.: G06F 17/60

(54) **System and method for generating mobile applications**

(30) Priority: 04.02.2002 GB 0202513
(71) Applicant: Idesta Solutions Ltd, Newquay, Cornwall TR8 5ET (GB)
(72) Inventor: Gregori, Vincent, Truro, Cornwall TR4 8EB (GB)
(74) Representative: McKechnie, Neil

(57) **Abstract**

A system and method for generating a mobile application script database 50 from a template 10 defining a collection of business processes and a translation library 30 defining attributes of and script segments for different software and/or hardware capabilities of mobile devices of mobile workers 80.

## Description

The present invention relates to the field of mobile computing solutions. A particular embodiment relates to a system and method for generating a mobile application script database from a template defining a collection of business processes and a translation library defining attributes of and script segments for different software and/or hardware capabilities of mobile devices.

At the present time, many industries provide mobile workers with mobile computing and communication devices which are used to provide the mobile worker with information they need to carry out their job, and also to store information reporting the tasks they have carried out. Example mobile workers are meter readers, goods delivery workers, travelling salesmen etc. Examples of the type of information would be a list of things to do during the day, customer addresses etc and then confirmation and verification information that tasks had been carried out, time stamps for particular events, new client information, notes etc.

For example, a postal delivery worker might, on a daily basis, download a list of parcels to deliver, where and when they have to be delivered and may, in the course of deliveries, scan parcel bar codes or make records to show that deliveries have been completed at particular times. Typically, these systems require considerable hardware specific programming and implementation. Such systems need customised depending on the nature of the hardware devices carried by mobile workers, the servers organising the system and the networking hardware (e.g. ethernet, telephone network) use for interfacing with mobile units at the beginning and end of the day. As well as the time and expense involved in customisation this means that individual organisations have separate and non-compatible mobile computing solutions.

Recently, internet-based application servers have become a popular method of delivering computing solutions to multiple users. It would be desirable to provide an application server adapted for the needs of companies with mobile workers. However, given the use by different firms of different hardware and software programs it is hard to see how this could be achieved.

Patent Application Number GB0029937.0 discloses a mobile computing system architecture. The aim of the invention disclosed in that Application is to provide application server technology for use in delivering mobile computing solutions to multiple users, being fully internet enabled, customisable and requiring minimal or no configuration by mobile workers. One aspect of that invention is the provision of a script database. The teachings of that Application are hereby incorporated by reference.

Known systems and architectures for delivering scripts to mobile devices determine the capabilities of a mobile device and translate "on the fly" to provide a script specific to the mobile device. An example of such an architecture is Microsoft™ Mobile Internet. However, such systems are not flexible enough and are slow for mobile users at the log-on stage when the capabilities of their devices are discovered and also during operation and delivery of scripts to the mobile device.

It is an aim of the present invention is to improve on the invention disclosed in GB0029937.0 by providing a development system for capturing business processes and the software and/or hardware capabilities of mobile devices and using this captured information to quickly and easily generate mobile application scripts for use in the mobile computing system architecture.

According to a first aspect of the present invention, there is provided a system comprising:
- at least one template comprising information about carrying out functions on mobile units;
- a translation library comprising information about carrying out functions on mobile units with different software and/or hardware capabilities; and
- a script generating module adapted to provided a plurality of application scripts for mobile units with different software and/or hardware capabilities responsive to said translation library and said at least one template.

Preferably the plurality of application scripts comprises script segments for carrying out particular functions on mobile units with different software and/or hardware capabilities.

Preferably said plurality of application scripts comprise a script database.

Preferably said information in said at least one template relates to a plurality of business processes.

Preferably said information in said translation library relates to a plurality of business processes.

Preferably said information that relates to a plurality of business processes is arranged in a hierarchical structure.

Preferably said information that relates to a plurality of business processes is represented by eXtensible Market Language (XML).

Typically said business processes are represented by XML tags.

Optionally said information that relates to business processes further comprises attributes that relate to dependencies on other business processes.

Optionally said information that relates to business processes further comprises attributes that relate to incompatibilities with other business processes.

Preferably said plurality of application scripts further comprise references to script segments within said plurality of application scripts.

More preferably said references are references to labels within said plurality of application scripts.

Optionally said references are hyperlinks.

Preferably said application script further comprises mobile user specific data, specific to a mobile user.

Preferably said script generating module is adapted to define the database schema on the mobile unit responsive to the business processes.

Preferably said script generating module is adapted to traverse the hierarchy of business processes.

Typically said script generating module is adapted to generate script responsive to traversing to the termination node of said hierarchy.

Optionally said script generating module is adapted to generate a warning responsive to said attributes that relate to dependencies on other business processes.

Optionally said script generating module is adapted to generate a warning responsive to said attributes that relate to incompatibilities with other business processes.

According to a second aspect of the present invention, there is provided a method comprising the steps:
- providing at least one template comprising information about carrying out functions on mobile units;
- providing a translation library comprising information about carrying out functions on mobile units with different software and/or hardware capabilities; and
- generating a plurality of application scripts for mobile units with different software and/or hardware capabilities responsive to said translation library and said at least one template.

Preferably the plurality of application scripts comprises script segments for carrying out particular functions on mobile units with different software and/or hardware capabilities.

Preferably said plurality of application scripts comprise a script database.

Preferably said information in said at least one template relates to a plurality of business processes.

Preferably said information in said translation library relates to a plurality of business processes.

Preferably said information that relates to a plurality of business processes is arranged in a hierarchical structure.

Preferably said information that relates to a plurality of business processes is represented by eXtensible Market Language (XML).

Typically said business processes are represented by XML tags.

Optionally said information that relates to business processes further comprises attributes that relate to dependencies on other business processes.

Optionally said information that relates to business processes further comprises attributes that relate to incompatibilities with other business processes.

Preferably said plurality of application scripts further comprise references to script segments within said plurality of application scripts.

More preferably said references are references to labels within said plurality of application scripts.

More preferably said references are hyperlinks.

Preferably said application script further comprises mobile user specific data, specific to a mobile user.

Preferably said step of generating a plurality of application scripts further comprises the step of defining the database schema on a mobile unit responsive to the business processes.

Preferably said step of generating a plurality of application scripts further comprises the step of traversing the hierarchy of business processes.

Preferably said step of generating a plurality of application scripts further comprises the step of generating script responsive to traversing to the termination node of said hierarchy.

Preferably said step of providing at least one template comprises the step of editing said template and adding a business process to said template.

Optionally said step of adding a business process to said template further comprises the step of adding a business process to said translation library.

Optionally said step of adding a business process to said template further comprises the step of adding a business process to a language translation file.

Optionally said step of generating a plurality of application scripts further comprises the step of generating a warning responsive to said attributes that relate to dependencies on other business processes.

Optionally said step of generating a plurality of application scripts further comprises the step of generating a warning responsive to said attributes that relate to incompatibilities with other business processes.

The present invention will now be illustrated with reference to the following figures in which:
Figure 1 shows a schematic diagram of the overall system architecture;
Figure 2 shows a schematic diagram of the application server architecture, as described by Patent Application No GB0029937.0;
Figure 3 shows the structure of part of a Vertical Market Template;
Figure 4 shows the structure of part of a translation library; and
Figure 5 shows the structure of a generated mobile application script segment.

Although the embodiments of the invention described with reference to the figures comprise computer apparatus and processes performed in computer apparatus, the present invention also extends to computer programs, particularly computer programs on or in a carrier, adapted for putting the invention into practice. The program may be in the form of source code, object code, a code of intermediate source and object code such as in partially compiled form suitable for use in the implementation of the processes according to the invention. The carrier may be any entity or device capable of carrying the program.

For example, the carrier may comprise a storage medium, such as ROM, for example a CD ROM or a semiconductor ROM, or a magnetic recording medium, for example, floppy disc or hard disc. Further, the carrier may be a transmissible carrier such as an electrical or optical signal which may be conveyed via electrical or optical cable or by radio or other means.

When the program is embodied in a signal which may be conveyed directly by a cable or other device or means, the carrier may be constituted by such cable or other device or means.

Alternatively, the carrier may be an integrated circuit in which the program is embedded, the integrated circuit being adapted for performing, or for use in the performance of, the relevant processes.

### System overview

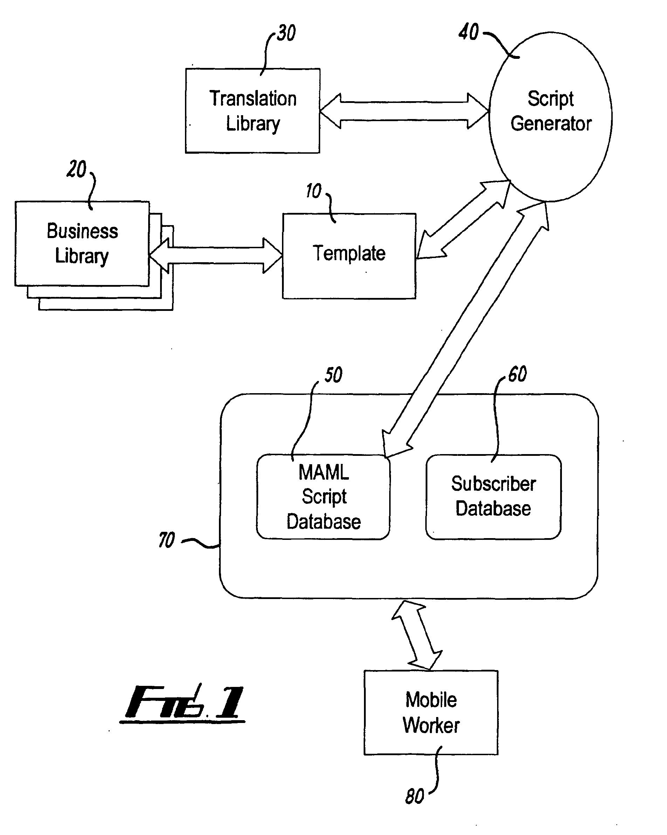

Figure 1 illustrates in block format the individual components of the system and the connectivity between them.

The system comprises one or more 'Vertical Market Templates' (VMTs) 10 that define a hierarchical structure of business process steps that relate to tasks which are to be carried out by mobile users. The VMT is a collection of business process definitions selected from the business library 20. These collection of processes may, for example, be performed in particular market segments within mobile enterprise systems, e.g., field service.

A complete set of business processes for a range of different mobile users in different industries may be added to and stored in the business library. The business library may thus be developed into a collection of all business process definitions relevant to "mobile enterprise" systems.

A translation library 30 contains records related to business process steps for mobile users, including attributes of different mobile devices, software and hardware capabilities and script segments specific to the different mobile devices. The translation library may be divided into two files or databases, one for script segments and the other describing the capabilities of different mobile devices and detailing the technology available in the target systems that are available for use in response to the scripts.

The script generator module 40 or mobile office builder (MOB)is a tool used to manipulate and manage the libraries and VMTs resulting in the generation of MAML (Mobile Application Mark-up Language) script/code 50. MAML script or byte code is a mobile office application.

The business process identifiers (which are XML tags) in the VMT are referenced in the translation library. The process is then expanded into MAML script or byte code by script generator module that merges a template and the translation library by traversing the XML hierarchy of the template and matching identifiers in the template with identifiers in the translation library. Design rules are then applied depending on the form factor of the target mobile device and the MAML script or byte code produced.

The script generator generates an MAML application script for each mobile device specified in the translation library. The generated MAML application script for each mobile device therefore contains script segments corresponding to the business process steps defined in each template. For example, two templates and five mobile devices specified in the translation library will give ten generated MAML application scripts.

A subscriber database 60 is used by the mobile application architecture 70 to deliver scripts to mobile workers 80. The subscriber database is a database where details of the mobile worker, together with details of any mobile devices this worker may use are stored. Also details of any applications which may be used by each mobile worker are stored. Usage statistics for each mobile worker are also stored in this database.

A mobile worker is an employee of any enterprise using the system. This employee will be mainly based in the field and, as such, will receive their instructions and return their findings to a central system whilst working remotely.

### Application Server

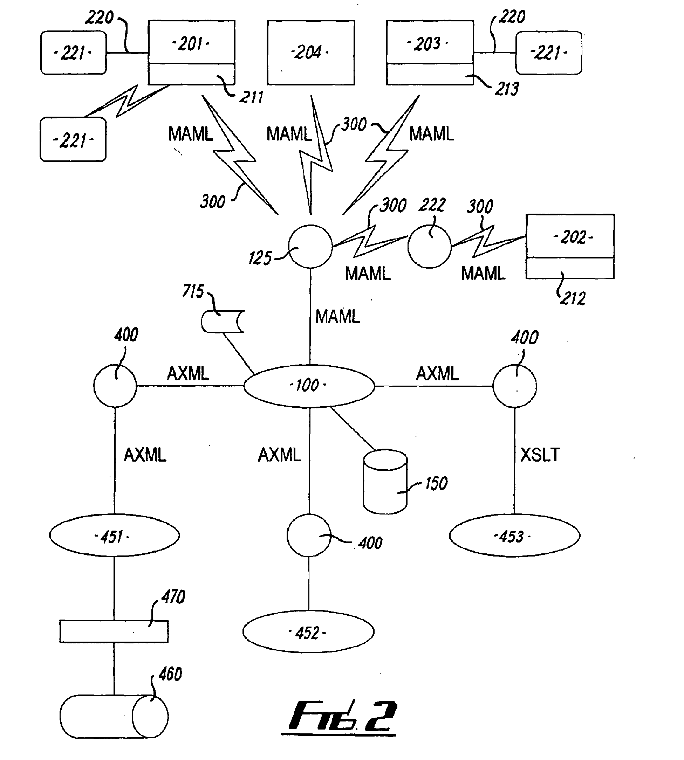

Figure 2 illustrates in block format the components and connectivity of the mobile computing system architecture described by Patent Application Number GB0029937.0.

The application server system comprises a web application server **100**, and a plurality of mobile computing devices capable of executing scripts shown by way of example as **201 - 204** and referred to generally as **200**. Typically, there are further provided one or more information servers shown by way of example as **451 - 453** and referred to generally as **450**.

The invention comprises program code, usually localised on the web application server, to enable different mobile units to function with the web application server. The invention also comprises one or more applications in a mark-up language, referred to as mobile application mark-up language (MAML), and the overall methodology and hardware of the system as a whole. MAML Applications dictate mobile device functionality and, in two different embodiments are either (a) interpreted into a script language appropriate to an individual mobile unit with reference to a database **150** of subscriber mobile unit information or (b) transmitted in MAML to the mobile computing devices which have thereon MAML interpreters.

Within this document, the statement of invention and claims, the term "script" refers to any collection or combination of stored program code or data for computers.

The invention also comprises a further protocol using markup language, here termed Application Extensible Mobile Language (AXML) used for exchange of information between the web application server and information servers.

The mobile devices **200** for use with the system can be of a variety of different types. The requirements of each are that it can communicate with the web application server, downloading and executing scripts and having the capacity to upload data.

### Mobile device hardware/software

Example mobile devices **200** would be a Windows CE™ mobile device **201** with JavaScript™ enabled browser **211,** a WAP mobile device **202** with WMLScript™ **212** connected through a WAP server **222,** a KVM™ mobile device **203** or Java™ virtual machine. Future technologies such as iMode™ and other formats could clearly also be used. In another embodiment an uninterpreted Application in the proprietary format herein referred to as MAML, discussed below can be interpreted by a MAML enabled mobile device **204**. Essentially, each mobile device **200** requires the capacity to exchange information with the web application server **100,** execute a script and input/output date through a user interface.

Browsers may be supplemented by ActiveX™ components or Java™ Applets on the device to communicate with device specific interfaces **220** for driving peripherals **221,** for example, software and hardware interfaces for signature capture systems, scanners, printers, the global positioning system, mobile telephone locating systems etc. This means that the mobile device can be used more or less out of the box with no specific applications or data required.

Mobile devices may for example be in the form of mobile telephones, palmtop organisers, laptop computers, computers integrated into vehicles etc. Users of mobile devices will typically be travelling workers such as salesmen, meter readers, delivery workers, van drivers, factory workers or robots.

In the example embodiment, mobile devices **200** communicate with the central web application server **100** via a network server **125,** typically an HTTP server, using TCP/IP. Communication between server **125** and mobile units **200** is through a communications network **300**. The communications network **300** could be a fixed PSTN line, LAN or WAN into which mobile units **200** can be connected from time to time, but will preferably be a mobile communications network such as GSM, GPRS or future mobile telephone systems. The mobile device could also be connected to either an Intranet or an Internet via a standard RAS connection using a direct network connection.
Information is exchanged between the network server **125** and mobile units **200** using known hardware independent exchange protocols such as TCP/IP. Use of a standard protocol such as TCP/IP allows different physical communications **300** to be readily used with different mobile devices **200**. Different types of physical communications network can be integrated as alternatives or consecutively as a data transmission pathway.

### Application server hardware/software

The web application server can be implemented in an industry standard development environment and application server for example COLDFUSION™. Usefully COLDFUSION™ can be run on any platform such as Windows NT™, SOLARIS™, LINUX™. The HTTP servers can be implemented using, for example, APACHE™, or other similar servers.

The web application server **100** has access to a subscriber database **150** which comprises information about the hardware and software capabilities, configuration and user data relating to individual subscriber mobile devices showing generally as **200**. The subscriber database is describe further below. Typically, the subscriber database is directly connected to the web application server **100**; alternatively, information can be stored on information servers or MAML enabled mobile devices **204**.

### Information server hardware/software

Information server systems comprise typically, an HTTP server **400**, an information server. Native or ODBC drivers **470** may be used to interface between an server **451** and associated database **460**. Said databases and drivers are readily implemented using common software tools available from, for example, Sybase™, Oracle™, DB2™, SQL server™ etc. Commonly available information servers include those sold by VANMAN™, OPTRAC™ and Systems Union™.

Typically, the central web application server **100** is connected through the internet to one or more information server systems shown by way of example as **451**, **452** and **453** and referred to generally as **450**. The information servers **450** may belong to the same organisation that owns the web application server **100** or may belong to third party organisations. Importantly, each of these information server systems may be entirely different in internal composition and configuration. The only requirement is that they can communicate with the central web application server in a specified interface format. The information servers function to provide information required by users of mobile units and to store information returned by them. For example, an information server may comprise information about a list of tasks to be performed on a particular day by a particular mobile user, belonging to a particular organisation which has subscribed to the facility provided by the web application server **100**.

### Vertical Market Template

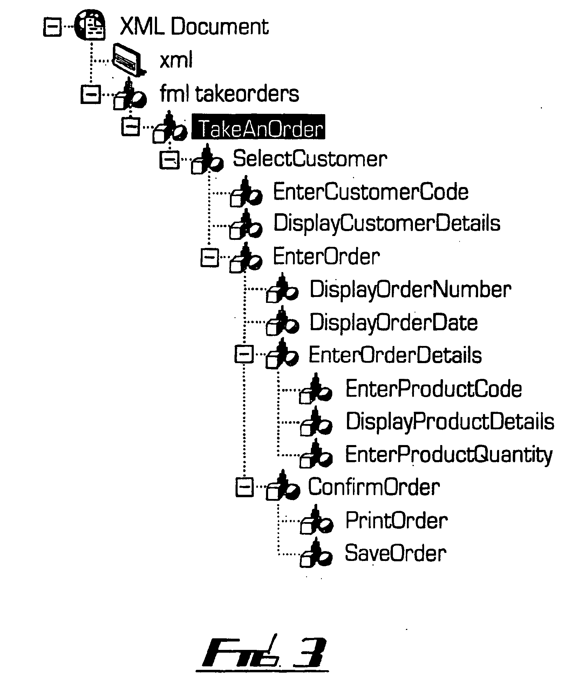

Figure 3 illustrates the structure of a vertical market template. The corresponding XML document is:

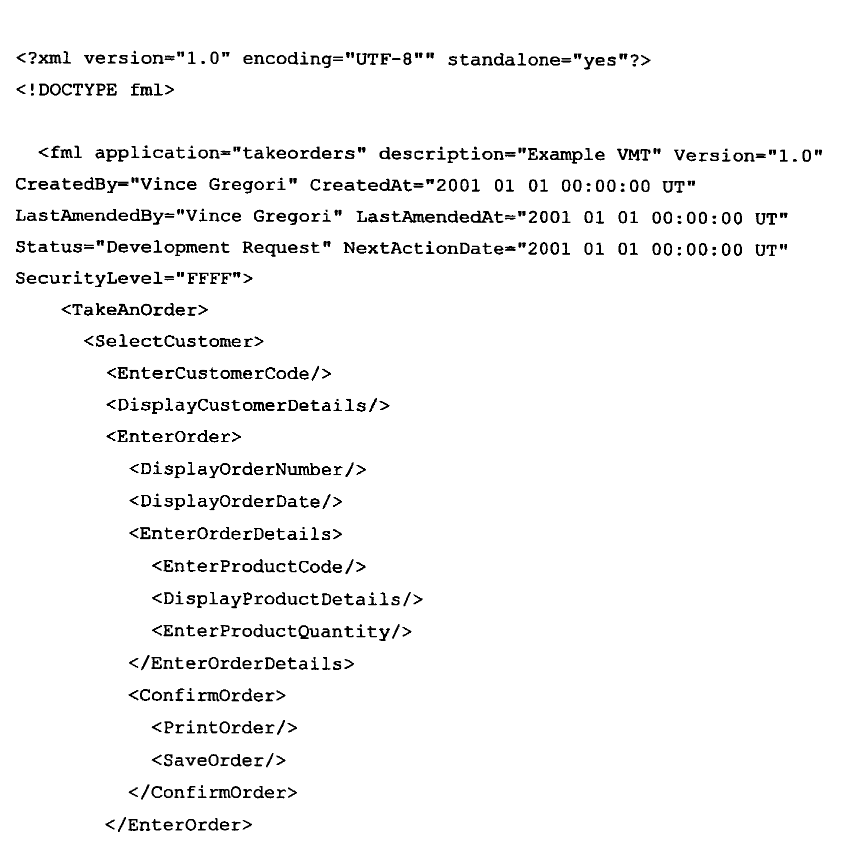

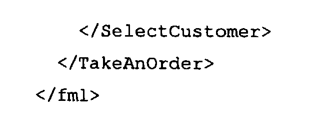

The template comprises information about carrying out functions on mobile units, in this case business processes. The information is arranged in a hierarchical structure with the business processes represented by XML tags, e.g. EnterOrder. This business process identifier is matched to the same identifier in the translation library during script generation.

When editing a template and adding a new business process to the template, if no matching business process identifier tag is found in the translation library, then the MOB will automatically add a dummy label tag into the translation library with the new business process identifier name. The translation library may be subsequently edited and the label replaced with mobile unit specific script segments and attributes.

Similarly, each time a new business process is added, then an entry may be automatically added to an XML language translation file for subsequent editing with foreign language translations, e.g. German or Dutch. The script generator is thus enabled to switch the language output to scripts for users in different countries by merging the language translation file with the template during script generation.

### Translation Library

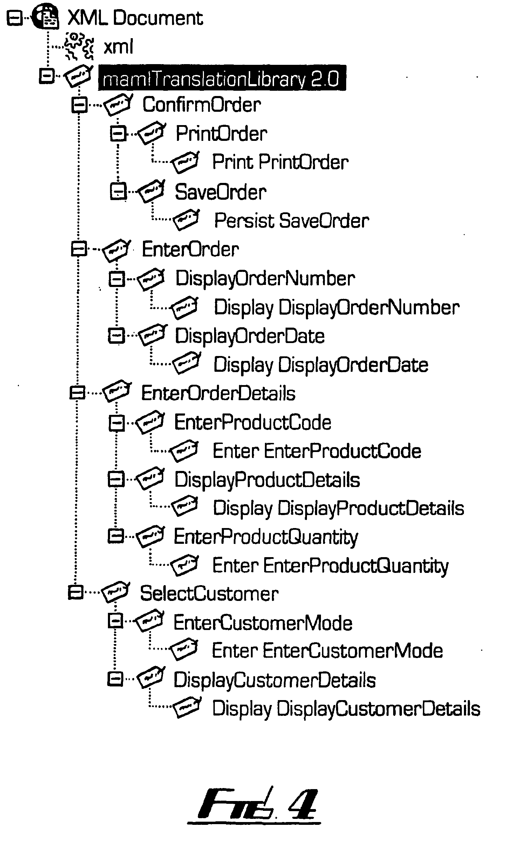

Figure 4 illustrates the structure of a translation library. The corresponding XML document is:

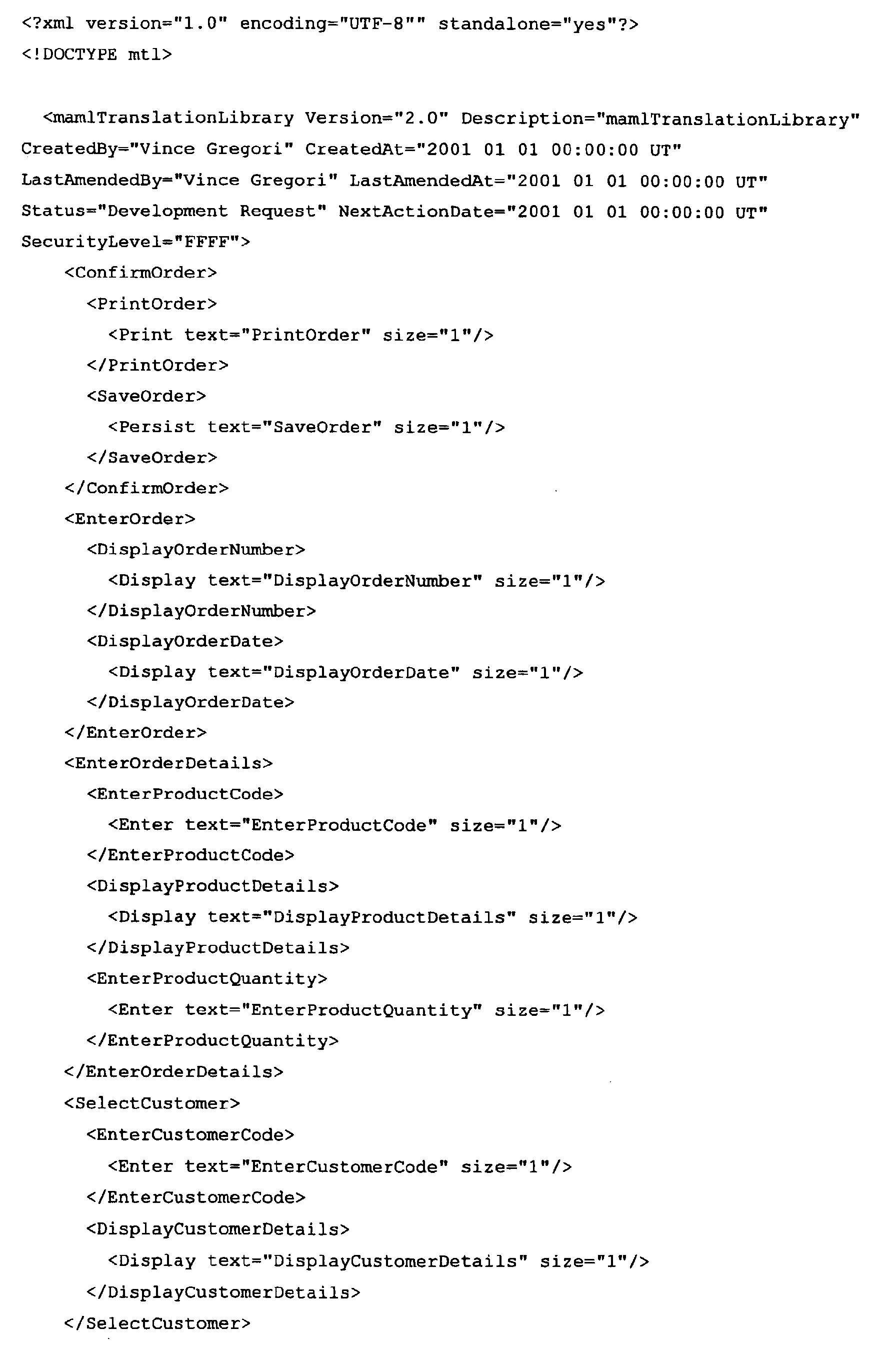

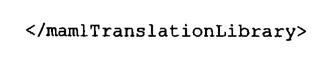

The translation library comprises information about carrying out functions on mobile units with different software and/or hardware capabilities, in this case business processes. The information is arranged in a hierarchical structure with the business processes represented by XML tags, e.g. EnterOrder. This business process identifier is matched to the same identifier in the template during script generation.

XML attributes in the translation library are used during script generation to make the resulting MAML script specific to the hardware and software capabilities (e.g. screen size) of the target mobile unit.

Other XML attributes may define dependencies on other business processes, e.g. entering an order must be preceded by selecting a customer. Similarly incompatibles between different processes may be defined in XML attributes.

### Generate MAML Script

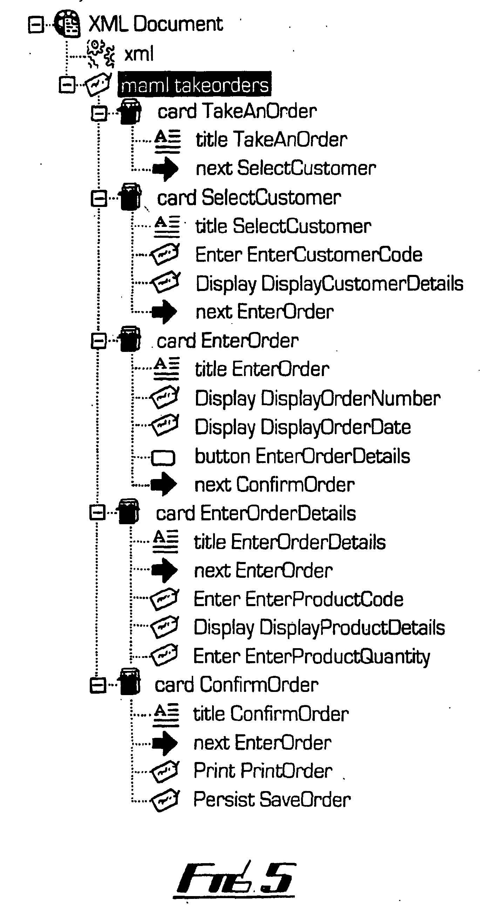

Figure 5 illustrates the structure of a generated script. The corresponding MAML XML document is:

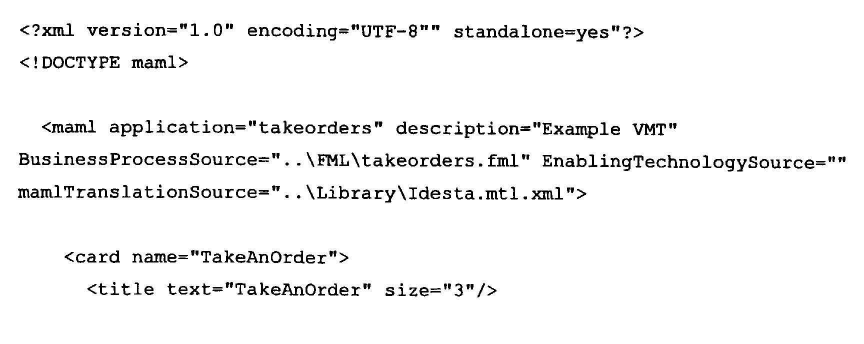

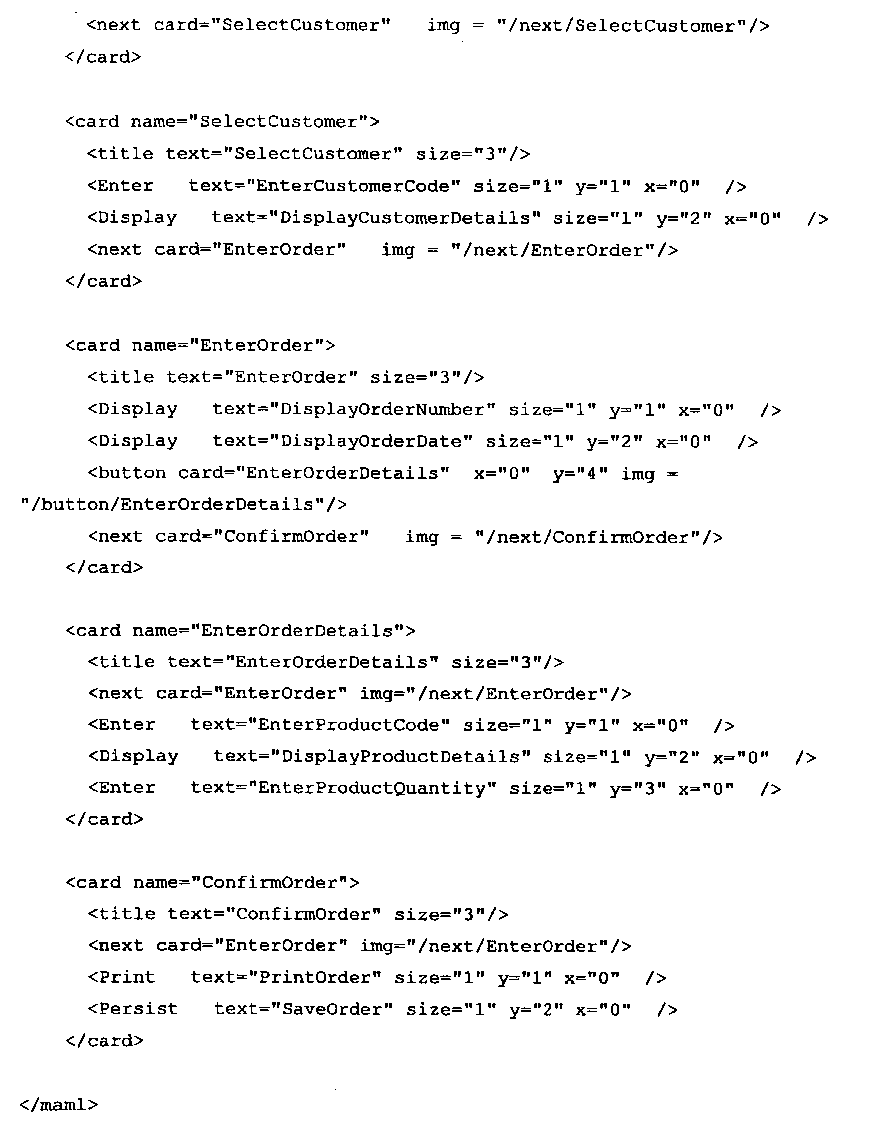

The script generator module generates application scripts for mobile units with different software and/or hardware capabilities using the translation library and at least one template. The application scripts, which are stored in a database, comprise script segments for carrying out particular functions on the different mobile units.

The information in the application script is arranged in a hierarchical structure with the business processes are represented by XML tags, e.g. EnterOrder. The script generator traverses the hierarchy of business processes in the template to the termination nodes of the hierarchy and generates the application script picking up specific script and attributes from the translation library.

A business process identifier, e.g. EnterOrder, is taken from the template and matched to the same identifier in the translation library during script generation.

The screen on the mobile device displays a series of "cards". The application can be represented as a "deck" of cards, with the deck being all of the screens in the application. For example, the name="EnterOrder" attribute for the card is generated from the business process identifier. The size attributes are specified for each particular mobile unit (or class of similar mobile units) in the translation library.

The script generator inserts tags for defining buttons with images (e.g. img =) and references such as hyperlinks (e.g. next card=) to other cards. The links are used by users to navigate around the cards on their mobile unit.

The application script may further comprises mobile user specific data.

The script generation process includes defining the database schema on a mobile unit responsive to the business flow. For example the database schema may be simplified to support as few business processes as are included in the template.

The script generator checks for consistency of the business processes using the attributes in the translation library or template that relate to incompatibilities and dependencies with other business processes. If inconstancies are found, then warnings (which may be switched off) are generated by the software, or the scripts are modified conditional on the inconstancies.

### Advantages

The present invention introduces 'Vertical Market Templates' (VMTs) to create business process driven applications across market sectors ranging from fast moving consumer goods to the engineering industry. Mobile enterprise applications can be built from VMTs for specific companies in a matter of days rather than months, as was previously the case for the traditional model of deployment. These VMT's can capture thousands of man-hours spent developing mobile business process logic for efficient reuse.

The business logic and data models that comprise the VMTs can be adapted to suit every mobile worker. The handhelds can be set up to capture and transmit all forms of data back to the enterprise for instantaneous processing. For example, a warehouse worker may need to scan product barcodes or a delivery driver may need to capture electronic signatures for delivery confirmations. All these forms of data capture can be incorporated into the design of the applications. The applications are also designed to support several languages including Chinese and Arabic script.

Previously, any software used by the mobile workforce would have been loaded onto the actual handset device used in the field. This brings obvious limitations in that if alterations or uploads are to be made to the software then the device must be brought back into the enterprise. The architecture supported by the present invention allows all of these updates to be deployed remotely via the central server, which resides at the company's enterprise. Using the present invention, the business logic within the application can be changed 'on the fly' by, for example, an Information Technology Manager and updated to all handhelds in the field remotely from the central server. The exchange of information between the field worker and the head office is faster than prior art solutions, regardless of the existing communications network, be it, e.g., GSM or GPRS.

Further modifications and improvements can be made by one skilled within the art within the scope of the invention herein disclosed.

## Claims

1. A system comprising:
• at least one template comprising information about carrying out functions on mobile units;
• a translation library comprising information about carrying out functions on mobile units with different software and/or hardware capabilities; and
• a script generating module adapted to provided a plurality of application scripts for mobile units with different software and/or hardware capabilities responsive to said translation library and said at least one template.

2. The system of claim 1 wherein the plurality of application scripts comprises script segments for carrying out particular functions on mobile units with different software and/or hardware capabilities.

3. The system of any previous claim wherein said plurality of application scripts comprise a script database.

4. The system of any previous claim wherein said information in said at least one template relates to a plurality of business processes.

5. The system of any previous claim wherein said information in said translation library relates to a plurality of business processes.

6. The system of any of claims 4 to 5 wherein said information that relates to a plurality of business processes is arranged in a hierarchical structure.

7. The system of any of claims 4 to 6 wherein said information that relates to a plurality of business processes is represented by eXtensible Market Language (XML).

8. The system of any of claims 4 to 7 wherein said business processes are represented by XML tags.

9. The system of any of claims 4 to 8 wherein said information that relates to business processes further comprises attributes that relate to dependencies on other business processes.

10. The system of any of claims 4 to 9 wherein said information that relates to business processes further comprises attributes that relate to incompatibilities with other business processes.

11. The system of any previous claim wherein said plurality of application scripts further comprise references to script segments within said plurality of application scripts.

12. The system of claims 11 wherein said references are references to labels within said plurality of application scripts.

13. The system of any of claims 11 to 12 wherein said references are hyperlinks.

14. The system of any previous claim wherein said application script further comprises mobile user specific data, specific to a mobile user.

15. The system of any of claims 4 to 14 wherein said script generating module is adapted to define the database schema on the mobile unit responsive to the business processes.

16. The system of any of claims 6 to 15 wherein said script generating module is adapted to traverse the hierarchy of business processes.

17. The system of any of claims 6 to 16 wherein said script generating module is adapted to generate script responsive to traversing to the termination node of said hierarchy.

18. The system of any of claims 9 to 17 wherein said script generating module is adapted to generate a warning responsive to said attributes that relate to dependencies on other business processes.

19. The system of any of claims 10 to 18 wherein said script generating module is adapted to generate a warning responsive to said attributes that relate to incompatibilities with other business processes.

20. A method comprising the steps:
• providing at least one template comprising information about carrying out functions on mobile units;
• providing a translation library comprising information about carrying out functions on mobile units with different software and/or hardware capabilities; and
• generating a plurality of application scripts for mobile units with different software and/or hardware capabilities responsive to said translation library and said at least one template.

21. The method of claim 20 wherein the plurality of application scripts comprises script segments for carrying out particular functions on mobile units with different software and/or hardware capabilities.

22. The method of any of claims 20 to 21 wherein said plurality of application scripts comprise a script database.

23. The method of any of claims 20 to 22 wherein said information in said at least one template relates to a plurality of business processes.

24. The method of any of claims 20 to 23 wherein said information in said translation library relates to a plurality of business processes.

25. The method of any of claims 20 to 24 wherein said information that relates to a plurality of business processes is arranged in a hierarchical structure.

26. The method of any of claims 23 to 25 wherein said information that relates to a plurality of business processes is represented by eXtensible Market Language (XML).

27. The method of any of claims 23 to 26 wherein said business processes are represented by XML tags.

28. The method of any of claims 23 to 27 wherein said information that relates to business processes further comprises attributes that relate to dependencies on other business processes.

29. The method of any of claims 23 to 28 wherein said information that relates to business processes further comprises attributes that relate to incompatibilities with other business processes.

30. The method of any of claims 23 to 29 wherein said plurality of application scripts further comprise references to script segments within said plurality of application scripts.

31. The method of claim 30 wherein said references are references to labels within said plurality of application scripts.

32. The method of any of claims 30 to 31 wherein said references are hyperlinks.

33. The method of any of claims 20 to 32 wherein said application script further comprises mobile user specific data, specific to a mobile user.

34. The method of any of claims 23 to 33 wherein said step of generating a plurality of application scripts further comprises the step of defining the database schema on a mobile unit responsive to the business processes.

35. The method of any of claims 25 to 34 wherein said step of generating a plurality of application scripts further comprises the step of traversing the hierarchy of business processes.

36. The method of any of claims 25 to 35 wherein said step of generating a plurality of application scripts further comprises the step of generating script responsive to traversing to the termination node of said hierarchy.

37. The method of any of claims 20 to 36 wherein said step of providing at least one template comprises the step of editing said template and adding a business process to said template.

38. The method of claim 37 wherein said step of adding a business process to said template further comprises the step of adding a business process to said translation library.

39. The method of any of claims 37 to 38 wherein said step of adding a business process to said template further comprises the step of adding a business process to a language translation file.

40. The method of any of claims 28 to 39 wherein said step of generating a plurality of application scripts further comprises the step of generating a warning responsive to said attributes that relate to dependencies on other business processes.

41. The method of any of claims 29 to 40 wherein said step of generating a plurality of application scripts further comprises the step of generating a warning responsive to said attributes that relate to incompatibilities with other business processes.
